# EUROPEAN PATENT APPLICATION

(11) **EP 4 811 595 A1**
(43) Date of publication of application: **23.09.2026**
(21) Application number: 26164742.4
(22) Date of filing: 13.03.2026
(51) Int. Cl.: H02J 3/38

(54) **GRID-CONNECTION POINT CONTROL METHOD FOR PHOTOVOLTAIC POWER STATION AND PHOTOVOLTAIC POWER STATION**

(30) Priority: 18.03.2025 CN 202510328256
(71) Applicant: Shanghai Sigeyuan Intelligent Technology Co., Ltd, Shanghai 201306 (CN)
(72) Inventor: KANG, Changquan, Shanghai, 201306 (CN)
(74) Representative: Di Bernardo, Antonio

(57) **Abstract**

A grid-connection point control method for a photovoltaic power station and a photovoltaic power station is provided. The grid-connection point control method for the photovoltaic power station includes: obtaining sampled electrical signal collected by respective electricity meters; determining target power corresponding to a target device among the at least one device that is connected to a target branch circuit among the one or more branch circuits, based on a first sum of the sampled electrical signals, a first power reference value corresponding to the target branch circuit, and a first capacity of the target device; and controlling the target device based on the target power.

## Description

### FIELD

The present disclosure belongs to the field of grid-connection point control, and more particularly, relates to a grid-connection point control method for a photovoltaic power station and a photovoltaic power station.

### BACKGROUND

For a photovoltaic power station operating in a grid-connected mode, grid-connection point control functions such as anti-backflow, power factor regulation, voltage and frequency control are required to ensure safe, stable, and efficient operation between the power station and the power grid. In the related art, grid-connection point control is performed by detecting a rate of change of a voltage and frequency at the grid-connection point with output power of an inverter module, to maintain stability of the grid-connection point. However, with this method, a control system failure will have a significant impact on the entire power station.

### SUMMARY

The present disclosure aims to address at least one of the technical problems existing in the prior art. To this end, the present disclosure provides a grid-connection point control method for a photovoltaic power station and a photovoltaic power station. Even if a certain control unit is abnormal, operation of the entire power station remains unaffected, which ensures normal power supply of the power station and improves flexibility and stability of system control.

In a first aspect, the present disclosure provides a grid-connection point control method for a photovoltaic power station. The photovoltaic power station includes one or more branch circuits connected to a grid-connection point. Each of the one or more branch circuits is connected to at least one device, and is provided with an electricity meter; and the method includes: obtaining sampled electrical signals collected by respective electricity meters; determining target power corresponding to a target device among the at least one device that is connected to a target branch circuit among the one or more branch circuits, based on a first sum of the sampled electrical signals, a first power reference value corresponding to the target branch circuit, and a first capacity of the target device; and controlling the target device based on the target power.

With the grid-connection point control method for the photovoltaic power station according to the present disclosure, by providing the electricity meter on each branch circuit, each device can be precisely controlled based on the sampled electrical signal collected by the electricity meter of each branch circuit, the first power reference value corresponding to each branch circuit, and the first capacity of each device, thus realizing precise grid-connection point control, ensuring the normal power supply of the power station, and improving the flexibility and stability of system control.

According to an embodiment of the present disclosure, the determining the target power corresponding to the target device among the at least one device that is connected to the target branch circuit among the one or more branch circuits, based on the first sum of the sampled electrical signals, the first power reference value corresponding to the target branch circuit, and the first capacity of the target device includes: constraining the first power reference value based on the first sum to obtain a second power reference value corresponding to the target branch circuit; and obtaining the target power corresponding to the target device based on the first capacity of the target device, a second capacity corresponding to the target branch circuit, and the second power reference value. The second capacity is a sum of a capacity of the at least one device connected to the target branch circuit.

According to an embodiment of the present disclosure, the obtaining the target power corresponding to the target device based on the first capacity of the target device, the second capacity corresponding to the target branch circuit, and the second power reference value includes: determining the target power corresponding to the target device based on a product of a ratio of the first capacity to the second capacity and the second power reference value.

According to an embodiment of the present disclosure, the constraining the first power reference value based on the first sum to obtain the second power reference value corresponding to the target branch circuit includes: determining a first power limit corresponding to the grid-connection point based on the first sum and a target constraint threshold; and constraining the first power reference value based on the second capacity corresponding to the target branch circuit, a third capacity corresponding to the photovoltaic power station, and the first power limit, to obtain the second power reference value corresponding to the target branch circuit. The third capacity is a sum of second capacities corresponding to the one or more branch circuits.

According to an embodiment of the present disclosure, the controlling the target device based on the target power includes: controlling the target device based on the target power and actual power of the target device.

According to an embodiment of the present disclosure, each of the sampled electrical signals includes active power and/or reactive power.

According to an embodiment of the present disclosure, the first power reference value corresponding to the target branch circuit is determined by: calculating a sum of initial power reference values corresponding to one or more inverters on the target branch circuit.

In a second aspect, the present disclosure provides a grid-connection point control apparatus for a photovoltaic power station. The photovoltaic power station includes one or more branch circuits connected to a grid-connection point. Each of the one or more branch circuits is connected to at least one device, and is provided with an electricity meter; and the apparatus includes: a first processing module configured to obtain sampled electrical signals collected by respective electricity meters; a second processing module configured to determine target power corresponding to a target device among the at least one device that is connected to a target branch circuit among the one or more branch circuits, based on a first sum of the sampled electrical signals, a first power reference value corresponding to the target branch circuit, and a first capacity of the target device; and a third processing module configured to control the target device based on the target power.

With the grid-connection point control apparatus for the photovoltaic power station according to the present disclosure, by providing the electricity meter on each branch circuit, each device can be precisely controlled based on the sampled electrical signal collected by the electricity meter of each branch circuit, the first power reference value corresponding to each branch circuit, and the first capacity of each device, thus realizing precise grid-connection point control, ensuring the normal power supply of the power station, and improving the flexibility and stability of system control.

In a third aspect, the present disclosure provides a photovoltaic power station. The photovoltaic power station includes: one or more branch circuits connected to a grid-connection point, each of the one or more branch circuits being connected to at least one device; one or more electricity meters arranged in one-to-one correspondence with the one or more branch circuits, each of the one or more electricity meters being disposed between the grid-connection point and a connection point where the at least one device is connected to a corresponding one of the one or more branch circuits, and being configured to collect a sampled electrical signal corresponding to the corresponding branch circuit; and a control module electrically connected to each of the one or more electricity meters and configured to execute the grid-connection point control method for the photovoltaic power station according to the first aspect.

In a fourth aspect, the present disclosure provides a non-transitory computer-readable storage medium, having a computer program stored thereon. The computer program, when executed by a processor, implements the grid-connection point control method for the photovoltaic power station according to the first aspect.

In a fifth aspect, the present disclosure provides a computer program product. The computer program product includes a computer program. The computer program, when executed by a processor, implements the grid-connection point control method for the photovoltaic power station according to the first aspect.

### BRIEF DESCRIPTION OF THE DRAWINGS

The above and/or additional aspects and advantages of the present disclosure will become more apparent and more understandable from the following description of embodiments taken in conjunction with the accompanying drawings, in which:
FIG. 1 is a first schematic flowchart of a grid-connection point control method for a photovoltaic power station according to an embodiment of the present disclosure;
FIG. 2 is a second schematic flowchart of a grid-connection point control method for a photovoltaic power station according to an embodiment of the present disclosure;
FIG. 3 is a third schematic flowchart of a grid-connection point control method for a photovoltaic power station according to an embodiment of the present disclosure;
FIG. 4 is a fourth schematic flowchart of a grid-connection point control method for a photovoltaic power station according to an embodiment of the present disclosure;
FIG. 5 is a first schematic structural diagram of a photovoltaic power station according to an embodiment of the present disclosure;
FIG. 6 is a second schematic structural diagram of a photovoltaic power station according to an embodiment of the present disclosure;
FIG. 7 is a third schematic structural diagram of a photovoltaic power station according to an embodiment of the present disclosure;
FIG. 8 is a fourth schematic structural diagram of a photovoltaic power station according to an embodiment of the present disclosure;
FIG. 9 is a fifth schematic structural diagram of a photovoltaic power station according to an embodiment of the present disclosure;
FIG. 10 is a sixth schematic structural diagram of a photovoltaic power station according to an embodiment of the present disclosure;
FIG. 11 is a seventh schematic structural diagram of a photovoltaic power station according to an embodiment of the present disclosure;
FIG. 12 is a schematic structural diagram of a grid-connection point control apparatus for a photovoltaic power station according to an embodiment of the present disclosure; and
FIG. 13 is a schematic structural diagram of an electronic device according to an embodiment of the present disclosure.

### DETAILED DESCRIPTION OF THE EMBODIMENTS

Technical solutions according to embodiments of the present disclosure will be described clearly and completely below in combination with accompanying drawings of the embodiments of the present disclosure. Obviously, the embodiments described below are only a part of the embodiments of the present disclosure, rather than all embodiments of the present disclosure. On the basis of the embodiments of the present disclosure, all other embodiments obtained by those skilled in the art without creative labor shall fall within the protection scope of the present disclosure.

Terms such as "first" and "second" in the specification and claims of the present disclosure are used only to distinguish between similar objects, rather than to describe a particular order or sequence. It should be understood that the data as used can be interchanged where appropriate, to enable the embodiments of the present disclosure described herein to be implemented in an order other than that illustrated or described herein. Also, the objects distinguished by the terms such as "first" and "second" are usually objects of the same type. The quantity of objects is not limited. For example, a first object may be one first object or plurality of first objects. In addition, "and/or" throughout the specification and claims indicates at least one of the objects associated with "and/or". The character "/" generally indicates that the associated objects before and after the character are in an "or" relationship.

A grid-connection point control method for a photovoltaic power station, a grid-connection point control apparatus for a photovoltaic power station, an electronic device, and a readable storage medium according to the embodiments of the present disclosure will be described below in detail with reference to specific embodiments and application scenarios thereof in combination with the accompanying drawings.

The grid-connection point control method for the photovoltaic power station may be applied to a terminal. In an embodiment, the grid-connection point control method for the photovoltaic power station may be executed by hardware or software in a terminal.

In the following various embodiments, a terminal including a display and a touch-sensitive surface is described. However, it should be understood that the terminal may include one or more other physical user interface devices such as a physical keyboard, a mouse and a joystick.

In the grid-connection point control method for the photovoltaic power station according to the embodiments of the present disclosure, an execution subject of the grid-connection point control method for the photovoltaic power station may be an electronic device or a functional module or a functional entity in the electronic device that is capable of implementing the grid-connection point control method for the photovoltaic power station. The electronic device mentioned in the embodiments of the present disclosure includes, but is not limited to, a mobile phone, a tablet computer, a computer, a camera, and a wearable device. The grid-connection point control method for the photovoltaic power station according to the embodiments of the present disclosure will be described below by taking the electronic device serving as the execution subject as an example.

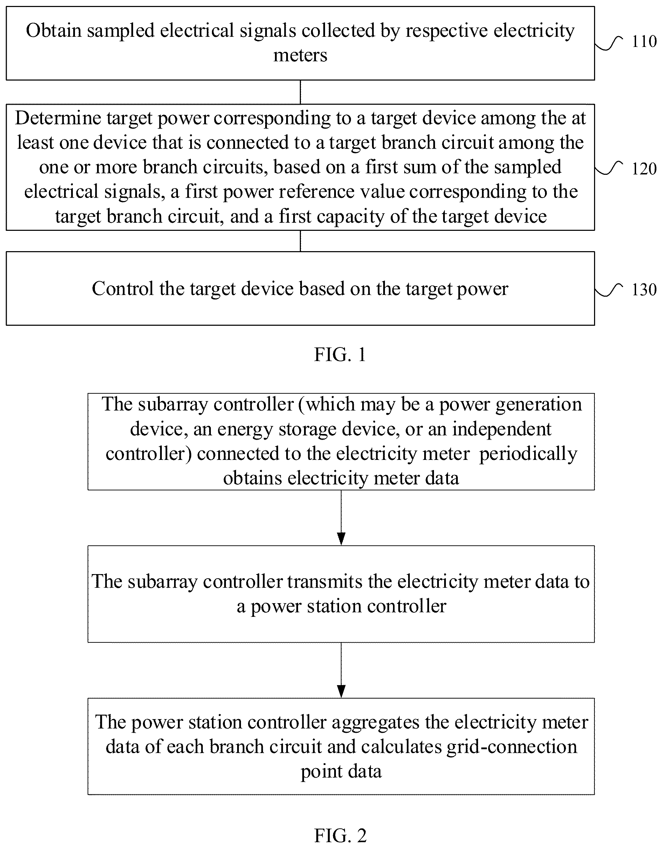

As shown in FIG. 1, the grid-connection point control method for the photovoltaic power station includes following steps 110, 120, and 130.

At step 110, sampled electrical signals collected by respective electricity meters are obtained.

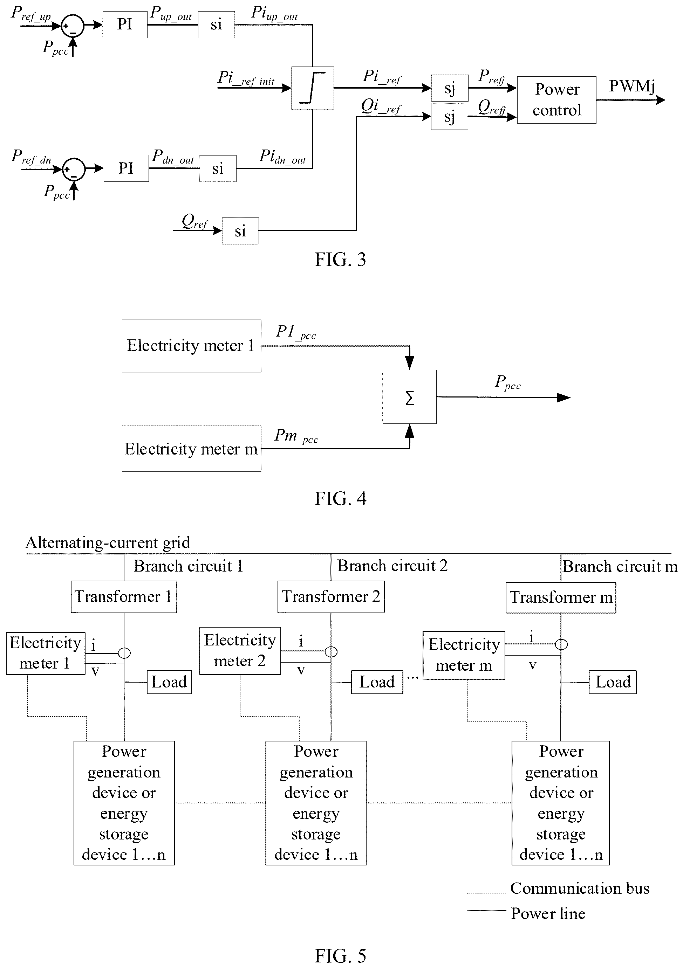

In this step, as shown in FIG. 5, the photovoltaic power station includes one or more branch circuits connected to a grid-connection point. Each branch circuit is connected to an alternating-current power grid through the grid-connection point, and is provided with an electricity meter. The electricity meter is configured to collect a sampled electrical signal of the branch circuit where the electricity meter is disposed.

With continued reference to FIG. 5, each branch circuit is correspondingly connected to at least one device, which may be a power generation device, an energy storage device, or other types of devices. The numbers and types of devices disposed on different branch circuits may be the same or different, and the types of the devices on the same branch circuit may be the same or different.

In some embodiments, a load may be connected to the branch circuit.

In some embodiments, the electricity meter is disposed between a transformer and a load connection point in the branch circuit. The transformer is arranged close to the grid-connection point.

In some embodiments, the sampled electrical signal may include: active power and/or reactive power.

In this embodiment, the active power or reactive power may be selectively collected based on a current actual operation state and control requirements of the photovoltaic power station. Of course, the active power and the reactive power may be collected together. The sampled electrical signal is used to represent total active power and/or reactive power corresponding to the branch circuit at a current collection time point.

In some embodiments, the sampled electrical signal may be a current or voltage, and the active power and/or reactive power may be obtained through conversion.

At step 120, target power corresponding to a target device among the at least one device that is connected to a target branch circuit among the one or more branch circuits is determined based on a first sum of the sampled electrical signals, a first power reference value corresponding to the target branch circuit, and a first capacity of the target device.

In this step, the target branch circuit may be any one of the one or more branch circuits, and the target device may be any one of the at least one device connected to the target branch circuit. The control logic corresponding to respective devices in the one or more branch circuits may be similar, and independent control may be performed in an actual control process. The control logic is described below by taking a device in a branch circuit as an example.

The first power reference value corresponding to the target branch circuit is a control reference value for balancing the branch circuit as a whole, and is an initial power reference value including an initial active power reference value and/or an initial reactive power reference value corresponding to the target branch circuit, which may be obtained from statistics of historical operating states. The target power is a control value for balancing the device.

The first capacity of the target device may be a rated capacity.

In some embodiments, the first power reference value corresponding to the target branch circuit may be determined by: calculating a sum of initial power reference values corresponding to one of more inverters on the target branch circuit.

In this embodiment, the initial power reference values corresponding to the one or more inverters may be summed to obtain the first power reference value.

The target power is a power reference value for controlling the operation of a single device, and includes target active power and/or target reactive power. For different devices, the corresponding target power may be calculated.

In some embodiments, a corresponding processing method may be selected based on the type of the sampled electrical signal to obtain the target power corresponding to the target device. In some embodiments, for the active power, the initial active power reference value corresponding to the target branch circuit may be constrained based on the sampled electrical signal collected by each electricity meter, and target active power corresponding to the target device may be calculated based on the constrained power. For the reactive power, no constraint may be performed, and the target reactive power corresponding to the target device may be directly obtained based on the initial reactive power reference value corresponding to the target branch circuit.

In some embodiments, step 120 may include: constraining the first power reference value based on the first sum to obtain a second power reference value corresponding to the target branch circuit; and obtaining the target power corresponding to the target device based on the first capacity of the target device, a second capacity corresponding to the target branch circuit, and the second power reference value.

In this embodiment, the second capacity is a sum of a capacity of the at least one device connected to the target branch circuit. In an actual implementation process, the second capacity may be determined based on a sum of a rated capacity of the at least one device disposed on the corresponding branch circuit.

The first sum is used to constraint the first power reference value within a range, to make the first power reference value within a reasonable range.

For the active power, the second power reference value is the first power reference value constrained by an upper limit and/or a lower limit. It can be understood that when the first power reference value is constrained by the first sum within an upper limit and a lower limit, the second power reference value may include extreme values such as a minimum value and a maximum value.

As shown in FIG. 4, as an example, the first power reference value is the initial active power reference value corresponding to the target branch circuit. In an actual implementation process, the sampled electrical signals corresponding to the active power collected by respective electricity meters are summed to obtain an electrical signal corresponding to the total active power after grid connection, i.e., the first sum Ppcc. Then, the initial active power reference value Pi_ref_init corresponding to a branch circuit where a certain device is located is constrained based on the first sum Ppcc to obtain a second power reference value Pi_ref corresponding to the branch circuit. A target active power Prefj corresponding to the device is then calculated in combination with a first capacity of the device, a second capacity of a branch circuit where the device is disposed, and a second power reference value Pi_ref of the branch circuit.

In some embodiments, the target power corresponding to the target device may be predicted by a pre-trained network model based on the first capacity of the target device, the second capacity corresponding to the target branch circuit, and the first power reference value.

In some embodiments, the constraining the first power reference value based on the first sum to obtain the second power reference value corresponding to the target branch circuit may include: determining a first power limit corresponding to the grid-connection point based on the first sum and a target constraint threshold; and constraining the first power reference value based on the second capacity corresponding to the target branch circuit, a third capacity corresponding to the photovoltaic power station, and the first power limit, to obtain the second power reference value corresponding to the target branch circuit.

In this embodiment, the target constraint threshold is an overall constraint threshold corresponding to the photovoltaic power station, and may include one or more constraint thresholds. The target constraint threshold corresponds to the active power.

For the active power, the target constraint threshold may include: an upper limit constraint threshold and/or a lower limit constraint threshold corresponding to the active power.

The first power limit is a total power limit corresponding to the photovoltaic power station, and may include: an upper power limit corresponding to the active power of the photovoltaic power station and a lower power limit corresponding to the active power of the photovoltaic power station. The upper power limit may be an output of an active upper limit loop, and the lower power limit may be an output of an active lower limit loop.

The third capacity is a sum of second capacities corresponding to all of the one or more branch circuits included in the photovoltaic power station.

As an example, the sampled electrical signal is the active power, and the target constraint threshold includes an upper limit constraint threshold Pref_up and a lower limit constraint threshold Pref_dn corresponding to the active power. As shown in FIG. 3, in an actual implementation process, a difference between the sum Ppcc of the sampled electrical signals collected by the electricity meters on respective branch circuits and the upper limit constraint threshold Pref_up is calculated, and PI control is performed on the difference to obtain an upper power limit Pup_out corresponding to the active power of the photovoltaic power station. A difference between the sum Ppcc of the sampled electrical signals collected by the electricity meters disposed on respective branch circuits and the lower limit constraint threshold Pref_dn is calculated, and PI control is performed on the difference to obtain a lower power limit Pdn_out corresponding to the active power of the photovoltaic power station.

A weight corresponding to the target branch circuit is then determined based on a proportion of the second capacity corresponding to the target branch circuit in the third capacity corresponding to the photovoltaic power station. The first power limit is weighted based on the weight corresponding to the target branch circuit, and the first power reference value corresponding to the target branch circuit is constrained by the weighted first power limit to obtain the second active power reference value corresponding to the target branch circuit.

In some embodiments, the constraining the first power reference value based on the second capacity corresponding to the target branch circuit, a third capacity corresponding to the photovoltaic power station, and the first power limit, to obtain the second power reference value corresponding to the target branch circuit may include: determining a second power limit corresponding to the target branch circuit based on a product of a ratio of the second capacity to the third capacity and the first power limit; and constraining the first power reference value based on the second power limit to obtain the second power reference value corresponding to the target branch circuit.

In this embodiment, the second power limit is a power limit of the active power corresponding to the target branch circuit, and may include: an upper power limit corresponding to the active power of the target branch circuit, and/or a lower power limit corresponding to the active power of the target branch circuit.

The second power limit corresponding to the active power may be determined by the following formulas: ${Pi}_{up _ out} = si ⋅ {P}_{up_ out} ,$ $si = \frac{{S}_{i}}{{\sum }_{k = 1}^{m} {S}_{k}} ,$ where
*Pi_{up_out}* is the upper power limit corresponding to active power of an i-th branch circuit, *si* is the ratio of the second capacity of the i-th branch circuit to the third capacity, *P_{up_out}* is the upper power limit corresponding to the active power of the photovoltaic power station, *Si* is the second capacity of the i-th branch circuit, and *Sₖ* is the second capacity of a k-th branch circuit, where k is a positive integer and satisfies k ≤ m, and i, j, and m are each positive integers. ${Pi}_{dn _ out} = si ⋅ {P}_{dn_ out} ,$ $si = \frac{{S}_{i}}{{\sum }_{k = 1}^{m} {S}_{k}} ,$ where
*Pi_{dn_out}* is the lower power limit corresponding to the active power of the i-th branch circuit, *si* is the ratio of the second capacity of the i-th branch circuit to the third capacity, *P_{dn_out}* is the lower power limit corresponding to the active power of the photovoltaic power station, *Sᵢ* is the second capacity of the i-th branch circuit, and *Sₖ* is the second capacity of the k-th branch circuit, where K is a positive integer and satisfies k ≤ m, and i, j, and m are each positive integers.

With the grid-connection point control method for the photovoltaic power station provided in the embodiments of the present disclosure, the first power reference value is constrained by the first sum, such that upper and lower active power limits of each branch circuit can be constrained to ensure that each branch circuit operates within a reasonable range. On this basis, balanced control is applied to each device in each branch circuit, thereby achieving precise grid-connection point control, ensuring normal power supply of the power station, and improving flexibility and stability of the system control.

In some embodiments, step 120 may include: determining the first power reference value as the second power reference value when the sampled electrical signal is the reactive power; and obtaining the target power corresponding to the target device based on the first capacity of the target device, the second capacity corresponding to the target branch circuit, and the second power reference value.

In this embodiment, with continued reference to FIG. 4, for the reactive power, an initial reactive power reference value Qi_ref_init corresponding to a branch circuit where a certain device is located may be directly used as the second power reference value Qi_ref corresponding to the branch circuit. Target reactive power Qrefj corresponding to the device is then calculated in combination with the first capacity of the device, the second capacity corresponding to the branch circuit where the device is disposed, and the second power reference value Qi_ref corresponding to the branch circuit.

In some embodiments, the first power reference value corresponding to the reactive power may be determined by: calculating a product of a ratio of the second capacity corresponding to the target branch circuit to the third capacity and initial reactive power corresponding to the photovoltaic power station.

In this embodiment, the first power reference value corresponding to the reactive power may be obtained by performing a weight calculation based on the initial reactive power corresponding to the photovoltaic power station.

The first power reference value corresponding to the reactive power may be determined by the following formulas: ${Qi}_{ref} = si ⋅ {Q}_{ref} ,$ $si = \frac{{S}_{i}}{{\sum }_{k = 1}^{m} {S}_{k}} ,$ where
*Qi_{ref}* is a first power reference value corresponding to the reactive power of the i-th branch circuit, *si* is the ratio of the second capacity of the i-th branch circuit to the third capacity, *Q_{ref}* is the initial reactive power corresponding to the photovoltaic power station, *Sᵢ* is the second capacity of the i-th branch circuit, and *Sₖ* is the second capacity of the k-th branch circuit, where k is a positive integer and satisfies k ≤ m, and i, j, and m are each positive integers.

In some embodiments, the obtaining the target power corresponding to the target device based on the first capacity of the target device, the second capacity corresponding to the target branch circuit, and the second power reference value may include: determining the target power corresponding to the target device based on a product of a ratio of the first capacity to the second capacity and the second power reference value.

In this embodiment, a weight of the target device is determined based on a proportion of the first capacity of the target device in a total capacity of all of the at least one device in the branch circuit where the target device is disposed, and weighting processing is performed on the second power reference value corresponding to the branch circuit where the target device is disposed based on the weight, to obtain the target power corresponding to the target device.

For the active power and the reactive power, calculation manners of obtaining the target power corresponding to the target device based on the first capacity of the target device, the second capacity corresponding to the target branch circuit, and the second power reference value are similar. Description is given below by taking the active power and the reactive power as examples respectively.

When the sampled electrical signal is the active power, the target active power may be calculated by the following formulas: ${P}_{refj} = sj ⋅ {Pi}_{ref} ,$ $sj = \frac{{S}_{j}}{{\sum }_{k = 1}^{n} {S}_{k}} ,$ where
P_{refj} is target active power corresponding to a j-th device in the i-th branch circuit, sj is the ratio of the first capacity of the j-th device to the second capacity of the i-th branch circuit, Pi_{ref} is the second active power reference value of the i-th branch circuit, Sⱼ is the first capacity of the j-th device, and Sₖ is the first capacity of the k-th device, where k is a positive integer and satisfies k ≤ n, and i, j, and m are each positive integers.

When the sampled electrical signal is the reactive power, the target reactive power may be calculated by the following formulas: ${Q}_{refj} = sj ⋅ {Qi}_{ref} ,$ $sj = \frac{{S}_{j}}{{\sum }_{k = 1}^{n} {S}_{k}} ,$ where
Q_{refj} is target reactive power corresponding to the j-th device in the i-th branch circuit, sj is the ratio of the first capacity of the j-th device to the second capacity of the i-th branch circuit, Qi_{ref} is a second active power reference value of the i-th branch circuit, Sⱼ is the first capacity of the j-th device, and Sₖ is the first capacity of the k-th device, where k is a positive integer and satisfies k ≤ n, and i, j, and m are each positive integers.

With the grid-connection point control method for the photovoltaic power station according to the embodiments of the present disclosure, the target power corresponding to the target device can be quickly calculated by the product of the ratio of the first capacity of the target device to the second capacity of the target branch circuit and the second power reference value. In this way, control power corresponding to each device in a complex grid-connected circuit environment can be quickly and accurately calculated, achieving power distribution for each branch circuit of the power station, thus realizing overall grid-connection point control and ensuring safe, stable, and efficient operation between the power station and the power grid.

At step 130, the target device is controlled based on the target power.

In this step, the target power is used as reference power corresponding to the target device. After the target power of the target device is obtained, an operating state of the target device is controlled based on the target power. The operating state of the target device may include outputting active power or absorbing reactive power from the grid-connection point.

For any one of the at least one device disposed on any one of the one or more branch circuits, independent control may be implemented by the method at steps 110 to 130.

In an actual implementation process, after the target power is calculated, a PWM wave for driving an inverter switching tube to operate may be generated based on the target power to control actual power of the inverter to track the target power.

In some embodiments, step 130 may include: controlling the target device based on the target power and actual power of the target device.

In this embodiment, the actual output power includes actual output power and/or actual absorbed power.

PI control may be performed on the target device based on the actual power and the target power of the target device.

Of course, other implementable control methods may also be adopted in other embodiments, which is not limited in the present disclosure.

During the research and development, the inventor found that in the related art, grid-connection point control is realized by mounting an electricity meter at the main grid-connection point to obtain electricity meter data. However, this method has problems such as a high voltage level (10 kV or 35 kV) and a large current at the grid-connection point, which imposes high requirements on the electricity meter and thus leads to high costs. Maintenance and replacement of the electricity meter require the entire power station to be powered off, making mounting and maintenance difficult and affecting the normal power supply. During capacity expansion of the power station, the mounted electricity meter may not support the increased capacity, and a new electricity meter supporting a larger capacity needs to be mounted instead, which further increases the mounting cost and replacement difficulty. In addition, the circuit has poor expandability.

In the present disclosure, an electricity meter is mounted at each branch circuit, such that the voltage level and capacity of each branch circuit are relatively low, which reduces the cost of the electricity meter. Mounting of the electricity meter on the branch circuit is simple, and only the corresponding branch circuit needs to be disconnected during maintenance, without affecting the other branch circuits. The entire power station can still continue power generation, thereby ensuring the normal power supply. On this basis, by mounting the electricity meter on each branch circuit, the control power corresponding to each device in the complex grid-connected circuit environment can be calculated while realizing the overall grid-connection point control function, which achieves the power distribution for each branch circuit of the power station, realizes a branch circuit power control function, and improves the flexibility and stability of the system control.

With the grid-connection point control method for the photovoltaic power station according to the embodiments of the present disclosure, by mounting the electricity meter on each branch circuit, each device can be precisely controlled based on the sampled electrical signal collected by the electricity meter of each branch circuit, the first power reference value of each branch circuit, and the first capacity of each device, thereby achieving the precise grid-connection point control, ensuring the normal power supply of the power station, and improving the flexibility and stability of the system control.

The grid-connection point control method for the photovoltaic power station according to the embodiments of the present disclosure may have an execution subject as the grid-connection point control apparatus for the photovoltaic power station. In the embodiments of the present disclosure, the grid-connection point control method for the photovoltaic power station executed by the grid-connection point control apparatus for the photovoltaic power station is taken as an example to illustrate the grid-connection point control apparatus for the photovoltaic power station according to the embodiments of the present disclosure.

Embodiments of the present disclosure further provide a grid-connection point control apparatus for a photovoltaic power station.

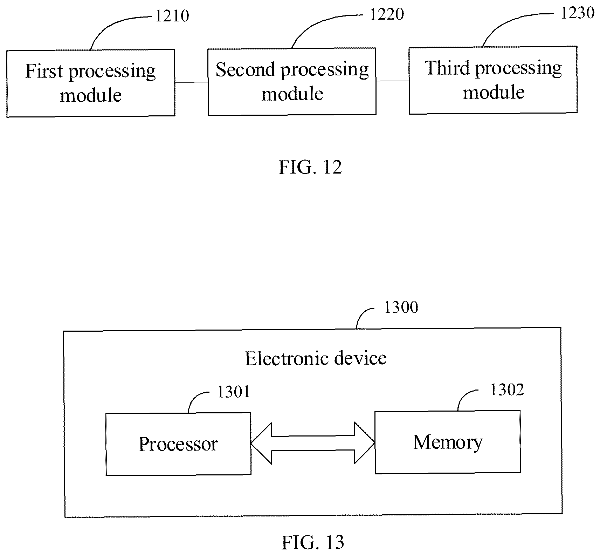

As shown in FIG. 12, the photovoltaic power station includes one or more branch circuits connected to a grid-connection point. Each of the one or more branch circuits is connected to at least one device, and is provided with an electricity meter. The grid-connection point control apparatus for the photovoltaic power station includes a first processing module 1210, a second processing module 1220, and a third processing module 1230.

The first processing module 1210 is configured to obtain sampled electrical signals collected by respective electricity meters.

The second processing module 1220 is configured to determine target power corresponding to a target device among the at least one device that is connected to a target branch circuit among the one or more branch circuits, based on a first sum of the sampled electrical signals, a first power reference value corresponding to the target branch circuit, and a first capacity of the target device.

The third processing module 1230 is configured to control the target device based on the target power.

In the grid-connection point control apparatus for the photovoltaic power station according to the embodiments of the present disclosure, by providing the electricity meter on each branch circuit, each device can be precisely controlled based on the sampled electrical signal collected by the electricity meter of each branch circuit, the first power reference value corresponding to each branch circuit, and the first capacity of each device, thereby realizing the precise grid-connection point control, ensuring the normal power supply of the power station, and improving the flexibility and stability of system control.

In some embodiments, the second processing module 1220 is further configured to: constrain the first power reference value based on the first sum to obtain a second power reference value corresponding to the target branch circuit; and obtain the target power corresponding to the target device based on the first capacity of the target device, a second capacity corresponding to the target branch circuit, and the second power reference value. The second capacity is a sum of a capacity of the at least one device connected to the target branch circuit.

In some embodiments, the second processing module 1220 is further configured to: determine the target power corresponding to the target device based on a product of a ratio of the first capacity to the second capacity and the second power reference value.

In some embodiments, the second processing module 1220 is further configured to: determine a first power limit corresponding to the grid-connection point based on the first sum and a target constraint threshold; and constrain the first power reference value based on the second capacity corresponding to the target branch circuit, a third capacity corresponding to the photovoltaic power station, and the first power limit, to obtain the second power reference value corresponding to the target branch circuit. The third capacity is a sum of second capacities corresponding to the one or more branch circuits.

In some embodiments, the third processing module 1230 is further configured to: control the target device based on the target power and actual power of the target device.

In some embodiments, the apparatus may further include a fourth processing module configured to: determine the first power reference value corresponding to the target branch circuit by calculating a sum of initial power reference values corresponding to one or more inverters on the target branch circuit.

The grid-connection point control apparatus for the photovoltaic power station according to the embodiments of the present disclosure may be an electronic device, or a component in the electronic device, such as an integrated circuit or a chip. The electronic device may be a terminal, or may be other equipment except a terminal. Exemplarily, the electronic device may be a mobile phone, a tablet computer, a laptop computer, a PDA, an in-vehicle electronic device, a mobile Internet device (MID), an augmented reality (AR)/virtual reality (VR) device, a robot, a wearable device, an ultra-mobile personal computer (UMPC), a netbook or a personal digital assistant (PDA), etc. It may also be a server, a network attached storage (NAS), a personal computer (PC), a television (TV), a teller machine or a self-service machine, etc., which is not specifically limited in the embodiments of the present disclosure.

The grid-connection point control apparatus for the photovoltaic power station according to the embodiments of the present disclosure may be an apparatus having an operating system. The operating system may be an Android operating system, an IOS operating system, or other possible operating systems, which are not specifically limited in the embodiments of the present disclosure.

The grid-connection point control apparatus for the photovoltaic power station according to the embodiments of the present disclosure can realize each process implemented by the method embodiments of FIGS. 1 to 4, and details thereof are omitted herein to avoid redundancy.

Embodiments of the present disclosure further provide a photovoltaic power station.

As shown in FIG. 5, the photovoltaic power station includes one or more branch circuits, one or more electricity meters, and a control module.

In this embodiment, the one or more branch circuits are connected to a grid-connection point. Each of the one or more branch circuits is connected to at least one device.

The one or more electricity meters are arranged in one-to-one correspondence with the one or more branch circuits. Each of the one or more electricity meters is disposed between the grid-connection point and a connection point where the at least one device is connected to the corresponding one of the one or more branch circuits, and is configured to collect a sampled electrical signal corresponding to the corresponding one of the one or more branch circuits.

The electricity meter may be connected in a wired or wireless manner, including but not limited to: RS485/WIFI/FE/SUB1G, etc.

The control module is electrically connected to each of the one or more electricity meters, and configured to execute the grid-connection point control method for the photovoltaic power station according to any of the above embodiments.

With the photovoltaic power station according to the embodiments of the present disclosure, by providing the electricity meter on each branch circuit, each device can be precisely controlled based on the sampled electrical signal collected by the electricity meter of each branch circuit, the first power reference value corresponding to each branch circuit, and the first capacity of each device, thereby realizing the precise grid-connection point control, ensuring the normal power supply of the power station, and improving the flexibility and stability of system control.

In some embodiments, the control module may include: a power station controller.

In this embodiment, the power station controller is any one of the at least one device, or is independent of the at least one device.

As shown in FIG. 2, the power station controller is configured to obtain the sampled electrical signal collected by the electricity meter of each branch circuit and data of the power generation device or energy storage device, calculate and allocate the target power corresponding to each device on each branch circuit, and realize control of each branch circuit and the grid-connection point of the power station.

In some embodiments, the control module may include: one or more subarray controllers.

In this embodiment, the one or more subarray controllers are arranged in one-to-one correspondence with the one or more branch circuits.

Each of the one or more subarray controllers is any one of the at least one device on the corresponding branch circuit, or is independent of the at least one device.

The power station may include: a power station controller, a subarray controller, and a plurality of power distribution branch circuits. Each branch circuit includes at least one of the power generation device, the energy storage device, and the electric device. When the branch circuit has the power generation device or energy storage device, the subarray controller (which may be an independent controller or the power generation device or the energy storage device itself) is required. The power station controller may be the power generation device or the energy storage device itself or an independent controller.

Each branch circuit needs to be provided with an electricity meter. The electricity meter may be connected to the power station controller, or to any power generation device or energy storage device in the branch circuit, or to the subarray controller.

It can be understood that the subarray controller corresponding to a certain branch circuit may be any one of the devices disposed on the branch circuit, or may be a controller independent of each device on the branch circuit. The subarray controller is electrically connected to each device on the branch circuit where it is disposed. The power station controller may be any one of the devices in the photovoltaic power station, or may be a controller independent of each device included in the photovoltaic power station.

With continued reference to FIG. 2, the electricity meter may be electrically connected to the subarray controller corresponding to the branch circuit where it is disposed, and configured to transmit the electricity meter data to the subarray controller, which forwards the data to the power station controller. Alternatively, the electricity meter may be directly electrically connected to the power station controller, and configured to transmit the electricity meter data to the power station controller.

The one or more subarray controllers may be electrically connected to the power station controller, or electrically connected in sequence according to their arrangement positions, with the last subarray controller electrically connected to the power station controller.

As shown in FIG. 5, in some embodiments, the electricity meter is electrically connected to the power generation device or the energy storage device. The subarray controller is one of the power generation device and the energy storage device, and the power station controller is one of the power generation device and the energy storage device. The power generation device or the energy storage device obtains the electricity meter data and transmits the data to the power station controller. The power station controller summarizes the electricity meter data of each branch circuit. The power station controller obtains the electricity meter data (the active power and the reactive power) of each branch circuit and the data (the active power, the reactive power, the rated capacity, and other information) of the power generation device or the energy storage device to calculate power output of the power generation device or the energy storage device, where m ≥ 2 and n ≥ 1.

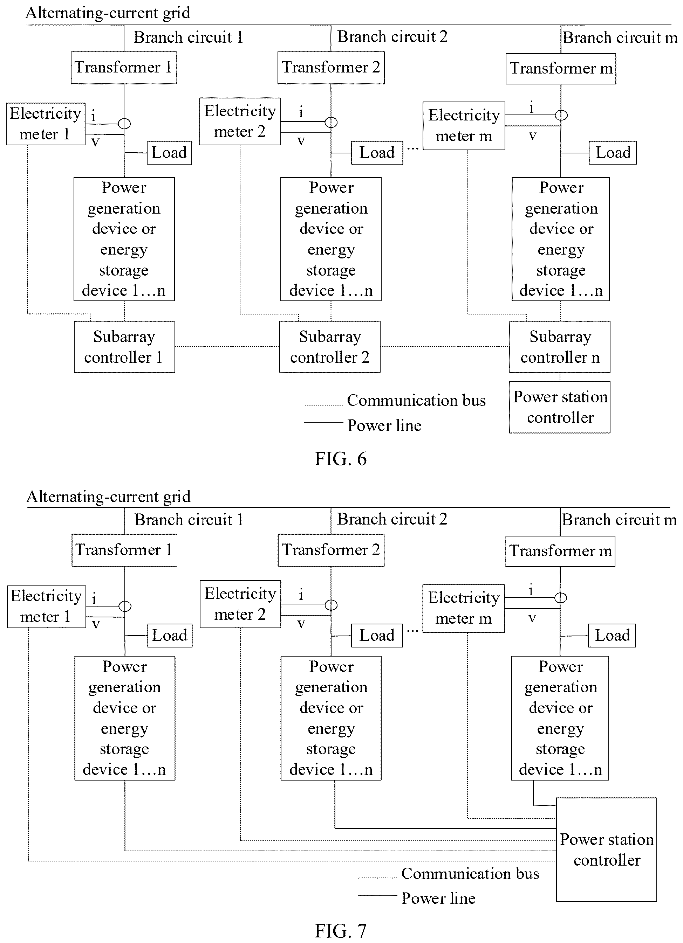

As shown in FIG. 6, in some embodiments, the power generation device or the energy storage device is connected to the subarray controller, and the electricity meter is connected to the subarray controller. The subarray controller and the power station controller are both independent controllers. The subarray controller obtains and transmits the electricity meter data to the power station controller, which obtains the electricity meter data (the active power and the reactive power) of each branch circuit and the data (the active power, the reactive power, the rated capacity, and other information) of the power generation device or the energy storage device to calculate the power output of the power generation device or the energy storage device.

As shown in FIG. 7, in some embodiments, the power generation device or the energy storage device is connected to the power station controller, the electricity meter is connected to the power station controller, and the power station controller, is an independent controller. The power station controller periodically obtains the electricity meter data (the active power and the reactive power) and the data (the active power, the reactive power, the rated capacity, and other information) of the power generation device or the energy storage device to calculate the power output of the power generation device or the energy storage device.

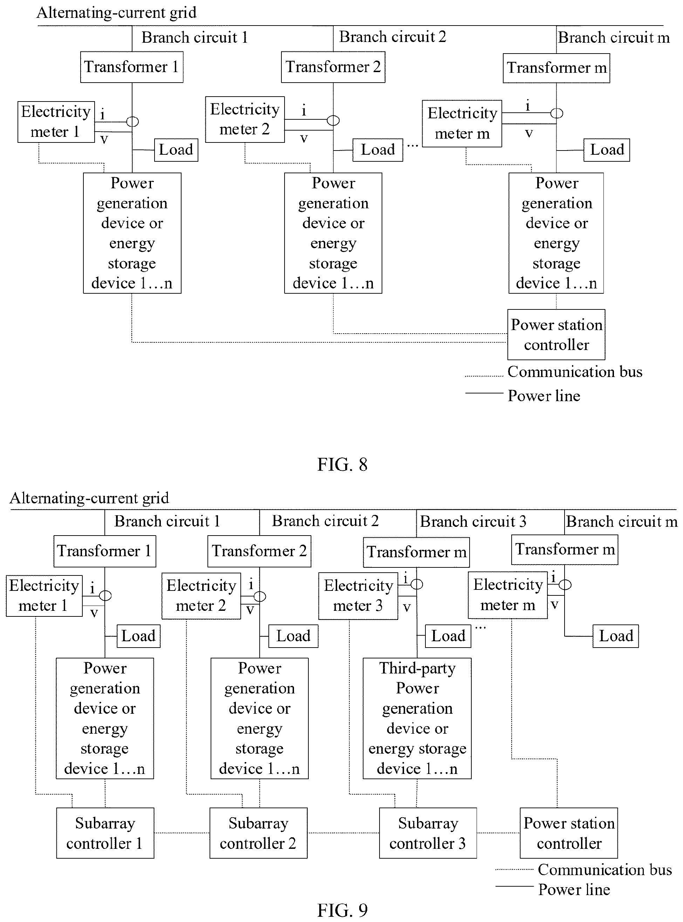

As shown in FIG. 8, in some embodiments, the power generation device or the energy storage device is connected to the power station controller, and the electricity meter is connected to the power generation device or the energy storage device. The power station controller is an independent controller. The power generation device or the energy storage device obtains the electricity meter data and transmits the data to the power station controller. The power station controller summarizes the electricity meter data of each branch circuit. The power station controller obtains the electricity meter data (the active power and the reactive power) of each branch circuit and the data (the active power, the reactive power, the rated capacity, and other information) of the power generation device or the energy storage device to calculate the power output of the power generation device or the energy storage device.

As shown in FIG. 9, in some embodiments, the power generation device or the energy storage device (which supports other third-party devices) is connected to the subarray controller. The electricity meter of the branch circuit is connected to the subarray controller or the power station controller. The subarray controller and the power station controller are both independent controllers. The subarray controller periodically obtains and transmits the electricity meter data. The power station controller obtains the electricity meter data (the active power and the reactive power) of each branch circuit and the data (the active power, the reactive power, the rated capacity, and other information) of the power generation device or the energy storage device to calculate the power output of the power generation device or the energy storage device. The subarray controller may communicate with the third-party power generation or energy storage device to obtain third-party device information or control the third-party device. The power station controller may further monitor power consumption data of a load branch circuit through the electricity meter.

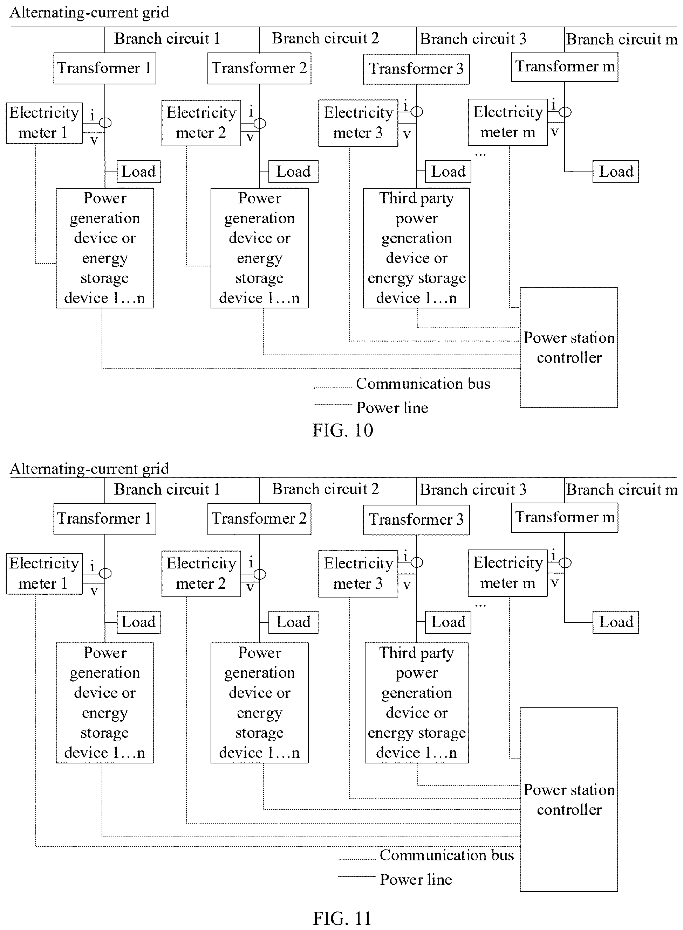

As shown in FIG. 10, in some embodiments, the power generation device or the energy storage device (which supports other third-party devices) is connected to the power station controller. The power station controller is an independent controller. The electricity meter of the branch circuit may be connected to the power generation device or the energy storage device, or the power station controller. The power generation device or the energy storage device periodically obtains and transmits the electricity meter data. The power station controller periodically obtains the electricity meter data (the active power and the reactive power) and the data (the active power, the reactive power, the rated capacity, and other information) of the power generation device or the energy storage device to calculate the power output of the power generation device or the energy storage device. The power station controller may communicate with the third-party power generation or energy storage device to obtain the third-party device information or control the device, and may further monitor the power consumption data of the load branch circuit through the electricity meter.

As shown in FIG. 11, in some embodiments, the power generation device or the energy storage device (which supports other third-party devices) is connected to the power station controller. The power station controller is an independent controller. The branch circuit electricity meter is connected to the power station controller. The power station controller periodically obtains the electricity meter data (the active power and the reactive power) and the data (the active power, the reactive power, the rated capacity, and other information) of the power generation device or the energy storage device to calculate the power output of the power generation device or the energy storage device. The power station controller may communicate with the third-party power generation or energy storage device to obtain the third-party device information or control the device, and may further monitor the power consumption data of the load branch circuit through the electricity meter.

In some embodiments, as shown in FIG. 13, embodiments of the present disclosure further provide an electronic device 1300. The electronic device 1300 includes a processor 1301, a memory 1302, and a computer program that is stored on the memory 1302 and executable on the processor 1301. The computer program is configured to implement, when executed by the processor 1301, the various processes of the embodiments of the grid-connection point control method for the photovoltaic power station described above, and can achieve the same technical effect. Details thereof are omitted herein to avoid redundancy.

It should be noted that the electronic device in the embodiments of the present disclosure includes the mobile devices and the non-mobile electronic devices that are mentioned above.

Embodiments of the present disclosure further provide a non-transitory computer-readable storage medium. The non-transitory computer-readable storage medium has a computer program stored thereon. The computer program is configured to implement, when executed by a processor, the various processes of the embodiments of the grid-connection point control method for the photovoltaic power station described above, and can achieve the same technical effect. Details thereof are omitted herein to avoid redundancy.

The processor is the processor in the electronic device described in the above embodiments. The readable storage medium includes a computer-readable storage medium, such as a computer read-only memory (ROM), a random access memory (RAM), a magnetic disk, or an optical disk.

Embodiments of the present disclosure further provide a computer program product. The computer program product includes a computer program. The computer program is configured to implement, when executed by a processor, the grid-connection point control method for the photovoltaic power station described above.

The processor is the processor in the electronic device described in the above embodiments. The readable storage medium includes a computer-readable storage medium, such as a computer read-only memory (ROM), a random access memory (RAM), a magnetic disk, or an optical disk.

Embodiments of the present disclosure further provide a chip. The chip includes a processor and a communication interface. The communication interface is coupled to the processor. The processor is configured to execute a program or instructions to implement the various processes of the embodiments of the grid-connection point control method for the photovoltaic power station described above, and can achieve the same technical effect. Details thereof are omitted herein to avoid redundancy.

It should be understood that the chip mentioned in the embodiments of the present disclosure can also be referred to as a system-level chip, a system chip, a chip system, or a system-on-chip, etc.

It should be noted that, terms herein "comprise", "include" or any other variations thereof are meant to cover non-exclusive including, such that the process, method, article or device including a series of elements do not only include those elements, but also include other elements that are not explicitly listed, or also include inherent elements of the process, method, article or device. In a case where there are no more restrictions, an element qualified by the statement "comprises a ..." does not exclude the presence of additional identical elements in the process, method, article or device that includes the said element. In addition, it should be noted that the scope of the methods and devices in the implementations of the present disclosure is not limited to performing the functions in the order shown or discussed, and may also include performing the functions in a substantially simultaneous manner or in a reverse order according to the involved functions. For example, the described methods may be performed in an order different from the described order, and various steps may be added, omitted, or combined. In addition, features described with reference to some examples may be combined in other examples.

From the above description of the implementations, those skilled in the art may clearly understand that the methods of the above embodiments can be implemented by software and a necessary general hardware platform. Of course, the method can also be implemented by hardware, but the former is a preferred implementation in many cases. Based on such understanding, the technical solutions of the present disclosure essentially, or the part contributing to the related art may be embodied in the form of a software product. The computer software product is stored in a storage medium (such as ROM/RAM, a magnetic disk, and an optical disc), and includes several instructions for allowing a terminal (which may be a mobile phone, a computer, a server, or a network device) to execute methods described in the embodiments of the present disclosure.

The embodiments of the present disclosure have been described above with reference to the accompanying drawings, but the present disclosure is not limited to the above-described specific implementations, which are merely schematic and not restrictive, and those skilled in the art can make many forms under the inspiration of the present disclosure without departing from the purpose of the present disclosure and the scope of the claims, all of which fall within the protection of the present disclosure.

In the description of this specification, descriptions with reference to the terms "an embodiment", "some embodiments", "schematic embodiments", "examples", "specific examples", or "some examples", etc., mean that specific features, structure, materials, or characteristics described in conjunction with the embodiment or example are included in at least one embodiment or example of the present disclosure. In this specification, the schematic representations of the above terms do not necessarily refer to the same embodiment or example. Moreover, the described specific features, structures, materials or characteristics may be combined in any one or more embodiments or examples in a suitable manner.

Although the embodiments of the present disclosure have been shown and described above, it can be understood by those skilled in the art that various changes, modifications, replacements, and variations can be made to these embodiments without departing from the principles and ideas of the present disclosure. The scope of the present disclosure is defined by the claims as attached and their equivalents.

## Claims

1. A grid-connection point control method for a photovoltaic power station, wherein:
the photovoltaic power station comprises one or more branch circuits connected to a grid-connection point, wherein each of the one or more branch circuits is connected to at least one device, and is provided with an electricity meter; and
the grid-connection point control method comprises:
obtaining sampled electrical signals collected by respective electricity meters;
determining target power corresponding to a target device among the at least one device that is connected to a target branch circuit among the one or more branch circuits, based on a first sum of the sampled electrical signals, a first power reference value corresponding to the target branch circuit, and a first capacity of the target device; and
controlling the target device based on the target power.

2. The grid-connection point control method according to claim 1, wherein the determining the target power corresponding to the target device among the at least one device that is connected to the target branch circuit among the one or more branch circuits, based on the first sum of the sampled electrical signals, the first power reference value corresponding to the target branch circuit, and the first capacity of the target device comprises:
constraining the first power reference value based on the first sum to obtain a second power reference value corresponding to the target branch circuit; and
obtaining the target power corresponding to the target device based on the first capacity of the target device, a second capacity corresponding to the target branch circuit, and the second power reference value,
wherein the second capacity is a sum of a capacity of the at least one device connected to the target branch circuit.

3. The grid-connection point control method according to claim 2, wherein the obtaining the target power corresponding to the target device based on the first capacity of the target device, the second capacity corresponding to the target branch circuit, and the second power reference value comprises:
determining the target power corresponding to the target device based on a product of a ratio of the first capacity to the second capacity and the second power reference value.

4. The grid-connection point control method according to claim 2, wherein the constraining the first power reference value based on the first sum to obtain the second power reference value corresponding to the target branch circuit comprises:
determining a first power limit corresponding to the grid-connection point based on the first sum and a target constraint threshold; and
constraining the first power reference value based on the second capacity corresponding to the target branch circuit, a third capacity corresponding to the photovoltaic power station, and the first power limit, to obtain the second power reference value corresponding to the target branch circuit,
wherein the third capacity is a sum of second capacities corresponding to the one or more branch circuits.

5. The grid-connection point control method according to any one of claims 1 to 4, wherein said controlling the target device based on the target power comprises:
controlling the target device based on the target power and actual power of the target device.

6. The grid-connection point control method according to any one of claims 1 to 4, wherein each of the sampled electrical signals comprises at least one of active power and reactive power.

7. The grid-connection point control method according to any one of claims 1 to 4, wherein the first power reference value corresponding to the target branch circuit is determined by:
calculating a sum of initial power reference values corresponding to one or more inverters on the target branch circuit.

8. A grid-connection point control apparatus for a photovoltaic power station, wherein:
the photovoltaic power station comprises one or more branch circuits connected to a grid-connection point, wherein each of the one or more branch circuits is connected to at least one device, and is provided with an electricity meter; and
the grid-connection point control apparatus comprises:
a first processing module configured to obtain sampled electrical signals collected by respective electricity meters;
a second processing module configured to determine target power corresponding to a target device among the at least one device that is connected to a target branch circuit among the one or more branch circuits, based on a first sum of the sampled electrical signals, a first power reference value corresponding to the target branch circuit, and a first capacity of the target device; and
a third processing module configured to control the target device based on the target power.

9. A photovoltaic power station, comprising:
one or more branch circuits connected to a grid-connection point, wherein each of the one or more branch circuits is connected to at least one device;
one or more electricity meters arranged in one-to-one correspondence with the one or more branch circuits, wherein each of the one or more electricity meters is disposed between the grid-connection point and a connection point where the at least one device is connected to a corresponding one of the one or more branch circuits, and is configured to collect a sampled electrical signal corresponding to the corresponding one of the one or more branch circuits; and
a control module electrically connected to each of the one or more electricity meters and configured to execute the grid-connection point control method for the photovoltaic power station according to any one of claims 1 to 7.

10. The photovoltaic power station according to claim 9, wherein the control module comprises:
a power station controller, wherein the power station controller is any one of the at least one device, or is independent of the at least one device.

11. The photovoltaic power station according to claim 9 or 10, wherein the control module further comprises:
one or more subarray controllers arranged in one-to-one correspondence with the one or more branch circuits, wherein each of the one or more subarray controllers is any one of the at least one device on a corresponding one of the one or more branch circuits, or is independent of the at least one device.

12. A non-transitory computer-readable storage medium, having a computer program stored thereon, wherein the computer program, when executed by a processor, implements the grid-connection point control method for the photovoltaic power station according to any one of claims 1 to 7.

13. A computer program product, comprising a computer program, wherein the computer program, when executed by a processor, implements the grid-connection point control method for the photovoltaic power station according to any one of claims 1 to 7.
